(19) Europäisches Patentamt
European Patent Office
Office européen des brevets

(11) Veröffentlichungsnummer: **0 045 997**
**B1**

# (12) EUROPÄISCHE PATENTSCHRIFT

(45) Veröffentlichungstag der Patentschrift: **16.10.85**

(51) Int. Cl.⁴: **C 08 G 18/79**, C 08 G 18/80, C 09 D 3/72, C 08 G 18/75

(21) Anmeldenummer: **81200893.6**

(22) Anmeldetag: **10.08.81**

(54) **Einbrennlacke.**

(30) Priorität: **13.08.80 DE 3030554**

(43) Veröffentlichungstag der Anmeldung: **17.02.82 Patentblatt 82/7**

(45) Bekanntmachung des Hinweises auf die Patenterteilung: **16.10.85 Patentblatt 85/42**

(84) Benannte Vertragsstaaten: **BE CH DE FR GB IT LI LU NL SE**

(56) Entgegenhaltungen:
**FR - A - 2 221 481**
**FR - A - 2 268 840**
**FR - A - 2 298 566**
**FR - A - 2 330 731**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG, Postfach 1320, D-4370 Marl 1 (DE)**

(72) Erfinder: **Schnurbusch, Horst, Dr., Overwegstrasse 36, D-4690 Herne 1 (DE)**
Erfinder: **Gras, Rainer, Dr., An der Ziegelei 91, D-4690 Herne 2 (DE)**
Erfinder: **Wolf, Elmar, Dr., Stauffenbergstrasse 7, D-4350 Recklinghausen (DE)**

(74) Vertreter: **Steil, Hanna, Dipl.-Chem. et al, RSP PATENTE - PB 15 Postfach 1320, D-4370 Marl 1 (DE)**

**EP 0 045 997 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zur Herstellung von bei gewöhnlicher Temperatur haltbaren Mischungen aus Polyisocyanaten und Polyhydroxyverbindungen verwendet man bekanntlich solche Polyisocyanate, deren reaktionsfähige Gruppen durch Umsetzung mit monofunktionellen Verbindungen verschlossen sind und die allgemein als blockierte, verkappte oder maskierte Polyisocyanate bezeichnet werden. Derartige Produkte werden in Liebigs Annalen Bd. 562, S. 205–229, beschrieben. Durch Einwirkung höherer Temperaturen spalten sie wieder in ihre Ausgangsstoffe zurück, wobei die nun freiwerdenden Isocyanatgruppen ihrerseits mit den in der Reaktionsmischung vorliegenden Polyhydroxyverbindungen reagieren können.

Ein solches, bei Raumtemperatur lagerstabiles Einkomponenten-Einbrennlack-System, besteht beispielsweise aus einem in einem hochsiedenden Lacklösungsmittel gelösten, mit ε-Caprolactam blockierten Addukt des 3-Isocyanatomethyl-3,5,5-trimethylcyclohexylisocyanat und einem hydroxylgruppenhaltigen Polyester auf Basis von überwiegend aromatischen Dicarbonsäuren und einem Gemisch aus Diolen und Triolen und wird in der DE-OS 2 346 818 beschrieben. Die Härtungsgeschwindigkeiten eines derartigen Systems sind jedoch für bestimmte Anwendungen zu langsam. Es gelingt zwar durch Katalysatoren, wie tertiäre Amine oder organische Zinnverbindungen, die Härtungsgeschwindigkeiten wesentlich zu steigern, doch wirken derartige Zusätze, besonders bei Anwesenheit von Verbindungen, die mit Isocyanaten zu reagieren vermögen, auch bereits in der Kälte auf die verkappten Polyisocyanate in der Weise ein, dass sie auch bei gewöhnlichen Temperaturen die Abspaltung der monofunktionellen Verbindung bewirken und so die Mischung instabil machen.

Ein weiterer Nachteil dieses in der DE-OS 2 346 818 beschriebenen Einkomponenten-Einbrennlack-Systems ist die hohe Konzentration des bei der Härtung freigesetzten Blockierungsmittels.

Die genannten Nachteile werden nach der vorliegenden Erfindung weitgehend vermieden, d.h. Härtungsdauer, Härtungstemperatur und Menge des abgespaltenen Blockierungsmittels sind erniedrigt.

Gegenstand der Erfindung sind Einbrennlacke auf Basis eines Gemisches aus hydroxylgruppenhaltigen Polymeren, blockierten Polyisocyanaten und organischen Lösungsmitteln sowie gegebenenfalls üblichen Lackzusätzen, bestehend aus

a. 40–70 Gew.-% eines Gemisches von hydroxylgruppenhaltigen Polymeren mit Hydroxylzahlen zwischen 40 und 200 mg KOH/g, vorzugsweise zwischen 60 und 150 mg KOH/g, und isocyanuratfreien uretdiongruppenhaltigen, teilweise oder ganz blockierten, gegebenenfalls mit Glykolen kettenverlängerten Isophorondiisocyanaten der allgemeinen Formel

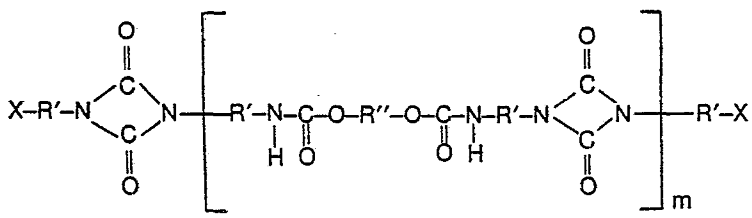

worin X = –N–C = O oder 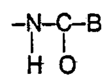 , m = 0–6

R' = 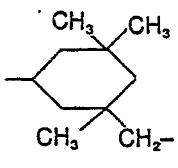

R'' = gleiche oder verschiedene, gegebenenfalls substituierte Alkylen- oder Cycloalkyl- bzw. Aromatenreste mit 1–12 C-Atomen,

B für 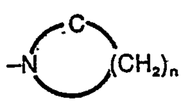 n = 3–7

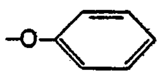

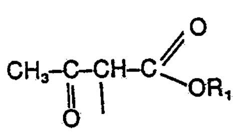

oder 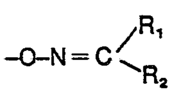

steht, worin $R_1$ und $R_2$ gleiche oder verschiedene aliphatische Kohlenwasserstoffreste mit 1–4 C-Atomen stehen, oder $R_1$ und $R_2$ zusammen mit dem, mit dem Stickstoffatom in einer Doppelbindung verknüpften C-Atom, einen cycloaliphatischen KW-Rest mit 5–6 C-Atomen bilden, und wobei auf ein Hydroxylgruppenäquivalent 0,8–1,2 NCO-Gruppenäquivalente kommen,

b. 0–3 Gew.-% Vernetzungskatalysator,

c. 30–60 Gew.-% organischem Lösungsmittel oder Lösungsmittelgemisch,

wobei sich die Prozentzahlen auf 100 addieren, sowie zusätzlich

d. 0–65 Gew.-% Pigmenten und/oder Füllstoffen,

e. 0–5 Gew.-% Farbstoffen und gegebenenfalls

f. 0,1–3 Gew.-% Verlaufmittel, Glanzverbesserer, Antioxidantien und/oder Hitzestabilisatoren.

Ausgangsmaterialien für die erfindungsgemässen Lacke sind Uretdiongruppen aufweisende Polyisocyanate auf Isophorondiisocyanat-(IPDI)Basis, die frei von Isocyanurat sind, bzw. einen in der Hitze rückspaltbaren Isophorondiisocyanatgehalt >98% besitzen und die durch Dimerisierung von IPDI mit Phosphinen der allgemeinen Formel

$$R_xP-(NR_2)_{3-x}$$

worin x = 0, 1, 2 und R gleiche oder verschiedene Substituenten aus der Gruppe H, Alkyl, Cycloalkyl, Aralkyl und Arylrest sind, hergestellt werden.

Die hier nicht beanspruchte Dimerisierung kann in Substanz oder bevorzugt in inerten organischen Lösungsmitteln vorgenommen werden. Bevorzugte Lösungsmittel sind hierbei Benzol, Toluol, Methyl- bzw. Äthylglykolacetat (EGA), Dimethylformamid, Xylol und andere aromatische oder aliphatische Kohlenwasserstoffe, auch Ketone, wie Aceton, Methylbutylketon, Methylisobutylketon oder Cyclohexanon und chlorierte aromatische Kohlenwasserstoffe sowie beliebige Gemische dieser und anderer inerter organischer Lösungsmittel.

Die Dimerisierung wird in einem Temperaturbereich von 0–100 °C durchgeführt. Vorzugsweise wird zwischen 0 °C und 60 °C gearbeitet. Da die Dimerisierungsreaktion in Gegenwart von Katalysatoren eine Gleichgewichtsreaktion ist und bei tiefen Temperaturen der höchste Dimerisierungsgrad erreicht wird, arbeitet man im allgemeinen bei relativ niedrigen Temperaturen. Für die Dimerisierung von IPDI sind Katalysatormengen von 0,2–3 Gew.-%, bezogen auf eingesetztes IPDI, ausreichend. Bevorzugt finden 0,5–2 Gew.-% Anwendung. Nach 10 bis 20 h Reaktionszeit stellt sich in Gegenwart der genannten Katalysatoren bei einer Reaktionstemperatur von 0–25 °C im allgemeinen ein Gehalt an freiem NCO ein, der einen Umsatz von ca. 20–60% der vorliegenden NCO-Gruppen des IPDI entspricht.

Das nicht umgesetzte PIDI wird mit dem Katalysator bei 130 °C und 0,1 Torr durch Dünnschichtverdampfung von NCO-haltigen Uretdion des IPDI abgetrennt.

Das so zugängliche Uretdiondiisocyanat kann entweder als ausschliessliche Isocyanatkomponente oder aber im Gemisch mit Uretdiongruppenfreiem IPDI eingesetzt werden. Der Zusatz des Uretdiongruppen-freien IPDI gestattet auf einfache Weise die Eigenschaften der Verfahrensprodukte, insbesondere ihren Schmelzpunkt, in gewünschter Weise zu variieren, da das Uretdiongruppen-freie, monomere IPDI als «Störkomponente» in die Verfahrensprodukte eingebracht wird. Es ist besonders vorteilhaft, beim erfindungsgemässen Verfahren als Isocyanatkomponente das oben erwähnte, in situ hergestellte IPDI-Gemisch einzusetzen, welches durch partielle Dimerisierung von IPDI mit den genannten Katalysatoren zugänglich ist. Bei dem so erhaltenen Uretdiongruppen aufweisenden IPDI, bzw. dessen Gemisch mit Uretdiongruppen-freiem IPDI, handelt es sich um eine Vorstufe bzw. Zwischenprodukt zu den erfindungsgemässen Verfahrensprodukten.

Für den erfindungsgemässen Einsatz wird nun dieses Zwischenprodukt wie nachstehend beschrieben in die Uretdiongruppen und teilweise oder ganz endständig blockierte Isocyanatgruppen aufweisende Verbindung überführt.

Wird nur teilweise blockiert, so ist es von Vorteil, das uretdiongruppenhaltige Isophorondiisocyanat vor oder nach dieser Blockierung einer Kettenverlängerung mittels Glykolen zu unterziehen. Besonders geeignete Glykole sind Ethylenglykol, Diethylenglykol, Butandiol-1,4, 3-Methylenpentandiol-1,5, Hexandiol-1,6, Dodecyldiole, Dimethylolcyclohexane, Diole auf aromatischer Basis, z.B. Dimethylolbenzol usw.

Geeignete Blockierungsmittel sind insbesondere Verbindungen mit vorzugsweise einer gegenüber NCO-Gruppen reaktionsfähigen Gruppe, die mit organischen Isocyanaten bei über 50 °C, vorzugsweise zwischen 80 °C und 120 °C, eine Additionsreaktion eingehen und deren so erhaltenen Additionsprodukte ein Gemisch mit nichtflüchtigen primären OH-Gruppen aufweisenden Polyolen bei Temperaturen zwischen 140 und 300 °C unter Freisetzung des Blockierungsmittels mit den nichtflüchtigen Polyolen unter Urethanbildung reagieren. Geeignete Blockierungsmittel sind Oxime, wie z.B. Acetonoxim, Methylethylketonoxim, Cyclohexanonoxim, Acetophenonoxim, Benzophenonoxim oder Diethylglyoxim, Lactame wie z.B. ε-Caprolactam, ε-Valerolactam, ε-Butyrolactam, Phenol und Acetessigsäureester.

Zur Durchführung der Blockierungsreaktion wird im allgemeinen das uretdionhaltige IPDI, gegebenenfalls kettenverlängert, vorgelegt und das Blockierungsmittel zugegeben. Die Reaktion kann in Substanz oder auch in Gegenwart geeigneter Lösungsmittel durchgeführt werden. Geeignete Lösungsmittel sind z.B. Benzol, Toluol, Methyl- bzw. Äthylglykolacetat, Dimethylformamid, Xylol und andere aromatische und aliphatische Kohlenwasserstoffe, auch Ketone, wie Aceton, Methylbutylketon oder Methylisobutylketon oder Cyclohexanon und chlorierte aromatische Kohlenwasserstoffe sowie beliebige Gemische dieser und anderer inerter organischer Lösungsmittel.

Die Blockierungsreaktion wird im allgemeinen bei Temperaturen von 0–150 °C, vorzugsweise 80–120 °C durchgeführt. Auch hier können die Katalysatoren, welche die Isocyanat-Polyadditionsreaktion beschleunigen, mitverwendet werden. Als mitzuverwendende Katalysatoren kommen nur solche in Frage, die keine stark basischen Zentren besitzen, da diese, an sich in der Polyisocyanatchemie gebräuchlichen Katalysatoren, bei dem erfindungsgemässen Verfahren eine vorzeitige Öffnung des Uretdionringes bewirken können. Hingegen finden beim erfindungsgemässen Verfahren organische Metallverbindungen, insbesondere organische Zinn-Verbindungen als Katalysator Verwendung.

Die teilweise oder ganz blockierten Uretdiongruppen-haltigen Polyisocyanate auf IPDI-Basis sind mit den hydroxylgruppenhaltigen Polymeren gut verträglich und liefern in organischen Lösungsmitteln homogene Lösungen, die sich sehr

gut zur Anwendung als Einbrennlacke eignen. Die erfindungsgemässen härtbaren Gemische sind bei Zimmertemperatur sehr gut lagerstabil, d.h. sie verändern sich weder physikalisch noch chemisch, d.h. die Bestandteile der Einbrennlacke reagieren bei Raumtemperatur nicht. Die Aushärtung der erfindungsgemässen Lacke erfolgt je nach Anwendung im Temperaturintervall von 100–350 °C, vorzugsweise zwischen 130 °C und 300 °C, innerhalb von 40 Minuten bis 20 Sekunden. Es erfolgt bei der Härtung eine Deblockierung der Härter, wobei IPDI freigesetzt wird. Die freigewordenen NCO-Gruppen reagieren dann mit den OH-Gruppen des Polyesters über eine NCO/OH-Reaktion unter Ausbildung von Urethanbindungen. Die gehärteten Überzüge bzw. Beschichtungen zeichnen sich durch sehr gute chemische und mechanische Eigenschaften sowie Chemikalienbeständigkeit aus.

Als erfindungsgemäss einsetzbare hydroxylgruppenhaltige Polymere werden hydroxylgruppenhaltige Polyester aus aliphatischen, cycloaliphatischen und/oder aromatischen Polycarbonsäuren mit Hydroxylzahlen zwischen 40 und 240 mg KOH/g bevorzugt. Für diesen Einsatzzweck sollten die Polyester weiter einen niedrigen Glasumwandlungspunkt besitzen, d.h. zwischen 20 °C und −25 °C. Die geeigneten Polyester besitzen darüberhinaus mehr als zwei OH-Gruppen im Durchschnitt pro Molekül.

Geeignete aliphatische, cycloaliphatische und aromatische Polycarbonsäuren sind, wobei die aromatischen ein- oder mehrkernig sind können, z.B. Oxalsäure, Bernsteinsäure,
Glutarsäure,
2,2-Dimethylglutarsäure, Adipinsäure,
2,2,4- bzw. 2,4,4-Trimethyl-adipinsäure,
Sebacinsäure, Dodecandicarbonsäure,
Terephthalsäure, Methylterephthalsäure,
2,5 und 2,6-Dimethylterephthalsäure,
Chlorterephthalsäure,
2,5-Dichlorterephthalsäure,
Fluorterephthalsäure, Isophthalsäure,
Phthalsäure, Trimellithsäure,
Naphthalindicarbonsäure, insbesondere die
1,4-, 1,5-, 2,5- und 2,7-Isomeren,
Phenylendiessigsäure,
4-Carboxyphenoxyessigsäure,
m- und p-Terphenyl-4,4″-Dicarbonsäure,
Dodecarhydrodiphensäure,
Tetrahydrophthalsäure,
Hexahydrophthalsäure,
Hexahydroterephthalsäure,
4,4′-Diphensäure, 2,2′- und
3,3′-Dimethyl-4,4′-diphensäure,
2,2′-Dibrom-4,4′-diphensäure,
Bis-(4-carboxyphenyl)-methan,
1,1- und 1,2-Bis-(4-carboxyphenyl)-ethan,
2,2-Bis-(4-carboxyphenyl)-propan,
1,2-Bis-(4-carboxyphenoxy)-ethan,
Bis-4-carboxyphenyl-ether,
Bis-4-carboxyphenylsulfid,
Bis-4-carboxyphenylketon,
Bis-4-carboxyphenylsulfoxid,
Bis-4-carboxyphenylsulfon,
2,8-Dibenzofurandicarbonsäure,
4,4′-Stilbendicarbonsäure und
Octadecahydro-m-terphenyl-4,4″-dicarbonsäure
u.a. Auch ungesättigte Säuren, die sich von vorgenannten Säuren ableiten lassen, können verwendet werden. Selbstverständlich können anstelle der genannten Säuren auch deren funktionelle Derivate, wie Anhydride, Ester u.a. eingesetzt werden. Es können auch Mischungen der vorgenannten Verbindungen verwendet werden.

Zur Herstellung der hydroxylgruppenhaltigen Polyester werden als Alkoholkomponente bevorzugt Diole verwendet. Die teilweise Mitverwendung von anderen Polyolen, z.B. Triolen, ist möglich; Beispiele für geeignete Diole sind: Ethylenglykol, Propylenglykol, wie
1,2- und 1,3-Propandiol sowie
2,2-Dimethylpropandiol-(1,3),
Butandiole, wie Butandiol-(1,3) bzw. (1,4),
3-Methylpentandiol-1,5, Hexandiole,
z.B. Hexandiol-(1,6),
2,2,4-Trimethylhexandiol-(1,6),
2,4,4-Trimethyl-hexandiol-(1,6),
Heptandiol-(1,7), Thioglykol,
Octadecandiol-(1,18),
2,4-Dimethyl-2-propylheptandiol-(1,3),
Buten- oder Butindiol-(1,4), Diethylenglykol,
Triethylenglykol, cis- und
trans-1,4-Cyclohexandimethanol,
1,4-Cyclohexandiole,
2,2-Bis-(4-hydroxycyclohexyl)-propan,
bisoxyethyliertes 2,2-Bis-(4-hydroxyphenyl)-propan*;
für andere Polyole:
Glycerin, Hexantriol-(1,2,6),
1,1,1-Trimethylolpropan,
1,1,1-Trimethylolethan, Pentaerythrit, u.a.
Es können auch Mischungen der vorgenannten Verbindungen verwendet werden.

Bei der Herstellung der Polyester wird das Polyol in solchen Mengen eingesetzt, dass auf 1 Carboxylgruppenäquivalent mehr als 1 OH-Gruppenäquivalent kommen, so dass Polyester der beschriebenen Charakteristika erhalten werden. Die erhaltenen Polyester stellen höherviskose Harze dar.

Die hydroxylgruppenhaltigen Polyester können in bekannter und üblicher Weise, d.h. durch Verestern oder Umestern, gegebenenfalls in Gegenwart von Katalysatoren, hergestellt werden. Dazu bieten sich insbesondere die beiden nachstehenden Verfahren an.

Im ersten Fall geht man beispielsweise von mineralsäurefreier Säure aus, die gegebenenfalls durch Umkristallisation zu reinigen ist. Das Verhältnis der Äquivalente von Säure zu Alkohol richtet sich naturgemäss nach der gewünschten Molekülgrösse und nach der erforderlichen OH-Zahl. Die Reaktionskomponenten werden nach Zugabe von 0,005–0,5 Gew.-%, vorzugsweise 0,05–0,2 Gew.-%, eines Katalysators, z.B. Zinnverbindungen, wie Di-n-butylzinndiester u.a., oder Titanester, insbesondere Tetraisopropyltita-

* Hydroxypivalinsäureneopentylglykolester

nat, in einer geeigneten Apparatur unter Durchleiten eines Inertgases, z.B. Stickstoff, erhitzt. In Abhängigkeit der eingesetzten Säure kommt es zur ersten Wasserabspaltung. Das Wasser wird destillativ aus dem Reaktionsgemisch entfernt. Innerhalb von mehreren Stunden wird die Reaktionstemperatur bis auf 240 °C erhöht. Das Reaktionsmedium bleibt bis kurz vor Ende der vollständigen Veresterung meist inhomogen. Nach ca. 24 h ist die Reaktion abgeschlossen.

Bei dem zweiten Verfahren geht man beispielsweise vom Dimethylester oder einem anderen Ester aus und estert unter Durchleiten eines Inertgases, z.B. trockenem Stickstoff, mit den gewünschten Alkoholkomponenten um. Als Umesterungskatalysatoren können wieder Titanester, Dialkylzinnester oder Dialkylzinnoxide in Konzentrationen von 0,005–0,5 Gew.-% eingesetzt werden. Nach dem Erreichen von ca. 120 °C kommt es meist zur ersten Methanolabspaltung. Innerhalb von mehreren Stunden wird die Temperatur auf 220–230 °C gesteigert. Je nach gewähltem Ansatz ist die Umesterung nach 2–24 h abgeschlossen.

Für die erfindungsgemässen Einkomponenten-Einbrennlacke geeignete Lösungsmittel sind solche, deren Siedepunkt mindestens bei 100 °C oder höher liegt. Die Siedetemperatur des eingesetzten Lösungsmittels ist von den jeweiligen Einbrenn-Temperaturen abhängig. Je höher diese liegen, desto höher können auch die Siedetemperaturen der zu verwendenden Lösungsmittel sein. Als Lösungsmittel kommen folgende Verbindungen in Frage:

Aromatische Kohlenwasserstoffe, wie Toluol, Xylole (auch technische Gemische), Tetrahydronaphthalin, Cumol u.a.; Ketone, wie Methylisobutylketon, Diisobutylketon, Isophoron, und Ester, wie n-Hexylacetat, Ethylglykolacetat, n-Butylglykolacetat, usw. Die genannten Verbindungen können auch als Gemische eingesetzt werden.

Zur Verbesserung der Verlaufeigenschaften der Lacke werden bei der Zubereitung sogenannte Verlaufmittel zugesetzt. Bei diesen Mitteln kann es sich um chemische Verbindungen bzw. deren Gemische sehr unterschiedlicher chemischer Art handeln, z.B. polymere oder monomere Verbindungen, Acetale, wie
Polyvinylformal, Polyvinylacetal,
Polyvinylbutyral,
Polyvinylacetobutyral bzw.
Di-2-ethylhexyl-i-butyraldehyd-acetal,
Di-2-ethylhexyl-n-butyraldehyd-acetal,
Diethyl-2-ethylhexanol-acetal,
Di-n-butyl-2-ethyl-hexanol-acetal,
Di-i-butyl-2-ethyl-hexanol-acetal,
Di-2-ethylhexyl-acetaldehyd-acetal u.a.,
Ether, wie die polymeren Polyethylen- und Polypropylenglykole, Mischpolymerisate aus n-Butylacrylat und Vinylisobutylether, Keton-Aldehyd-Kondensationsharze, feste Siliconharze, Siliconöle oder auch Gemische von Zinkseifen, von Fettsäuren und aromatischen Carbonsäuren u.ä. Derartige Verlaufmittel können in den Ansätzen in Mengen bis zu 3,0 Gew.-%, bezogen auf die Gesamtmenge Bindemittel (Polyester + blockiertes Polyisocyanat), Vernetzungskatalysator und Lösungsmittel bzw. – Gemisch, enthalten sein.

Die Umsetzung der hydroxylgruppenhaltigen Polyester mit den durch Deblockierung freigesetzten Polyisocyanaten kann durch Katalysatoren in den angegebenen Mengen beschleunigt werden. Beispiele für geeignete Katalysatoren sind einmal organische Sulfonsäuren, zum anderen organische Zinnverbindungen, wie Di-n-butylzinndilaurat.

Die anderen Bestandteile des Einbrennlacks, wie Farbstoffe, Pigmente, Füllstoffe, wie Titandioxid, Russ, organische und anorganische Buntpigmente, Talkum, Schwerspat u.ä., Thioxotropiermittel, UV- und Oxidationsstabilisatoren u.a. können, bezogen auf die Menge Bindemittel (Polyester + blockiertes, Uretdiongruppen enthaltendes Polyisocyanat), Vernetzungskatalysator und Lösungsmittel bzw. -Gemisch innerhalb des angegebenen Bereichs schwanken.

Die erfindungsgemässen Einkomponenten-Einbrennlacke können in geeigneten Mischaggregaten, z.B. Rührkesseln, durch einfaches Vermischen der drei Lackkomponenten, hydroxylgruppenhaltiger Polyester, blockiertes Polyisocyanat und Lösungsmittel bzw. -Gemisch bei 80–100 °C hergestellt werden. Auch übliche Zuschlagstoffe, wie Pigmente, Verlaufmittel, Glanzverbesserer, Antioxidantien und Hitzestabilisatoren, können ebenfalls in einfacher Weise der Lacklösung zugesetzt werden.

Die Applikation des Einkomponenten-Einbrennlackes auf die zu überziehenden Körper kann nach bekannten Methoden geschehen.

Nach der Applikation werden die Anstriche zur Aushärtung auf Temperaturen oberhalb der Aufspalttemperatur des Härtungsmittels, d.h. 130–350 °C, vorzugsweise 160–300 °C, erhitzt. Danach besitzt der resultierende Überzug die beschriebenen Vorteile.

Zur Beschichtung mit den erfindungsgemässen Einkomponenten-Einbrennlacken eignen sich alle Substrate, die die angegebenen Härtungstemperaturen ohne Einbusse der mechanischen Eigenschaften vertragen, wie Metallflächen, u.ä.

Die erfindungsgemässen Lacke finden vor allem Anwendung in der Coil-Coating-Lackierung, für wetterstabile Ein- und Zweischicht-Lackierungen.

Herstellungsbeispiele

A Isocyanatkomponenten

1) Herstellung des uretdiongruppenhaltigen Isophorondiisocyanats

100 Gew.-T. IPDI wurden mit 1,0 Gew.-T. Tris-(dimethyl-amino)-phosphin versetzt und 20 h bei Raumtemperatur stehen gelassen. Der NCO-Gehalt dieses Gemisches nach dieser Zeit betrug 31 Gew.-%, d.h., dass ca. 40% des eingesetzten IPDI reagiert hatten. Anschliessend wurde dieses Gemisch der Dünnschichtdestillation bei 130 °C und 0,1 Torr (0,133 mbar) unterworfen. Der Rückstand war katalysator- und IPDI-frei und hatte einen NCO-Gehalt von 17,6%. Wurde der Rückstand 60 Minuten bei 180 °C erhitzt, so stieg der NCO-Gehalt auf 37,4%. Dieser «sogenannte Heisswert» war ein direktes Mass für den Gehalt an Uretdiongruppen im Reaktionsprodukt.

2) Blockierung des Uretdiongruppen-haltigen Isophorondiisocyanats mit ε-Caprolactam

Zu 238,6 Gew.-T. des gemäss A1 hergestellten Reaktionsprodukts wurden bei 80–100 °C 113 Gew.-T. ε-Caprolactam portionsweise so zugegeben, dass die Reaktionstemperatur nicht über 120 °C stieg. Nach beendeter ε-Caprolactam-Zugabe wurde noch so lange bei 100 °C erhitzt, bis der NCO-Gehalt unter 0,4% sank. Das Reaktionsprodukt hatte folgende physikalische Daten:

| | |
|---|---|
| NCO-Gehalt (latent): | 25,15% |
| Schmelzpunkt: | 72–78 °C |
| Glaserweichungstemperatur (DTA): | 52–67 °C |

Die Auslaufviskosität im DIN-4-Becher bei 20 °C der 60%igen Lösung in

| | |
|---|---|
| a) Butylacetat/Xylol 1:3 | 45 sec |
| b) EGA/Xylol 1:2 | 63 sec |
| c) EGA/Solvesso® 150 1:2 | 145 sec |

3) Blockierung des uretdiongruppenhaltigen Isophorondiisocyanats mit Acetonoxim

Zu 238,6 Gew.-T. des gemäss A1 hergestellten Reaktionsproduktes wurden bei 80–100 °C 73 Gew.-T. Acetonoxim portionsweise so zugegeben, dass die Reaktionstemperatur nicht über 120 °C stieg. Nach beendeter Acetonoximzugabe wurde noch so lange bei 100 °C erhitzt, bis der NCO-Gehalt unter 0,4% sank. Das Reaktionsprodukt besass folgende physikalische Daten:

| | |
|---|---|
| NCO-Gehalt (latent): | 28,33% |
| Schmelzpunkt: | 74–81 °C |
| Glaserweichungstemperatur (DTA): | 54–68 °C |

Die Auslaufviskosität im DIN-4-Becher bei 20 °C der 60%igen Lösung in

| | |
|---|---|
| a) Butylacetat/Xylol 1:3 | 50 sec |
| b) EGA/Xylol 1:2 | 69 sec |
| c) EGA/Solvesso® 150 1:2 | 155 sec |

4) Teilweise Blockierung des uretdiongruppenhaltigen Isophorondiisocyanat

Allgemeine Herstellungsvorschrift

Zu einer Mischung aus dem gemäss A1 hergestellten Reaktionsprodukt, Lösungsmittel und 0,1 Gew.-% Dibutylzinndilaurat wird bei 70–80 °C das Blockerungsmittel portionsweise so zugegeben, dass die Temperatur nicht über 100 °C stieg. Nach beendeter Blockierungsmittelzugabe wurde so lange bei 100 °C erhitzt, bis die Umsetzung vollständig war. Die Umsetzung wurde mittels titrimetrischer NCO-Bestimmung kontrolliert.

a) Blockierung mit ε-Caprolactam
485,1 Gew.-T. gemäss A1
114,9 Gew.-T. ε-Caprolactam
400,0 Gew.-T. Lösungsmittel

| | Butylacetat/Xylol 1:3 | EGA/Xylol 1:2 | EGA/Solvesso 1:2 |
|---|---|---|---|
| NCO-Gehalt theor. | 4,3% | 4,3% | 4,3% |
| (frei) prakt. | 4,0–4,1% | 4,0–4,2% | 4,0–4,2% |
| NCO-Gehalt (latent) | 29,91% | 29,91% | 29,91% |
| Auslaufviskosität bei 20 °C im DIN-4-Becher in sec. | 25 | 29 | 40 |

b) Blockierung mit ε-Caprolactam
536,5 Gew.-T. gemäss A1
63,5 Gew.-T. ε-Caprolactam
400,0 Gew.-T. Lösungsmittel

| | Butylacetat/Xylol 1:3 | EGA/Xylol 1:2 | EGA/Solvesso 1:2 |
|---|---|---|---|
| NCO-Gehalt theor. | 7,1% | 7,1% | 7,1% |
| (frei) prakt. | 6,8–7,0% | 6,8–7,0% | 6,8–7,0% |
| NCO-Gehalt (latent) | 33,08% | 33,08% | 33,08% |
| Auslaufviskosität bei 20 °C im DIN-4-Becher in sec. | 13 | 20 | 25 |

c) Blockierung mit Acetonoxim
520,4 Gew.-T. gemäss A1
79,6 Gew.-T. Acetonoxim
400,0 Gew.-T. Lösungsmittel

| | Butylacetat/Xylol 1:3 | EGA/Xylol 1:2 | EGA/Solvesso 1:2 |
|---|---|---|---|
| NCO-Gehalt theor. (frei) prakt. | 4,6%<br>4,3–4,5% | 4,6%<br>4,3–4,5% | 4,6%<br>4,3–4,5% |
| NCO-Gehalt (latent) | 32,09% | 32,09% | 32,09% |
| Auslaufviskosität bei 20 °C im DIN-4-Becher in sec. | 27 | 33 | 45 |

d) Blockierung mit Acetonoxim
557,4 Gew.-T. gemäss A1
42,6 Gew.-T. Acetonoxim
400,0 Gew.-T Lösungsmittel

| | Butylacetat/Xylol 1:3 | EGA/Xylol 1:2 | EGA/Solvesso 1:2 |
|---|---|---|---|
| NCO-Gehalt theor. (frei) prakt. | 7,4%<br>7,1–7,3% | 7,4%<br>7,1–7,3% | 7,4%<br>7,1–7,3% |
| NCO-Gehalt (latent) | 34,37% | 34,37% | 34,37% |
| Auslaufviskosität bei 20 °C im DIN-4-Becher in sec. | 16 | 22 | 27 |

B Polyester

1) 7 Mol (1162 g) Isophthalsäure, 2 Mol (268 g) Trimethylolpropan, 5 Mol (590 g) Hexandiol-1,6 und 1 Mol (160 g) 2,2,4 bzw. 2,4,4-Trimethylhexandiol-1,6 wurden in einem 4-l-Glaskolben zur Veresterung gebracht. Als Veresterungskatalysator wurden 0,05 Gew.-% Di-n-butyl-zinn-oxid eingesetzt. Bei ca. 190 °C kam es zur ersten Wasserabspaltung. Innerhalb von 6–8 h wurde die Temperatur auf 220 °C erhöht. Die Veresterung wurde innerhalb 6 h bei 220 °C zu Ende geführt. Der Polyester wurde auf 200 °C abgekühlt und durch Anlegen von Vakuum (15–30 mmHg) (20–40 mbar) innerhalb 30–45 Minuten weitgehend von flüchtigen Anteilen befreit. Während der gesamten Reaktion wurde ein schwacher $N_2$-Strom durch das Reaktionsgemisch geleitet.

Physikalische Kenndaten
OH-Zahl: 90–105 mg KOH/g
Säurezahl: < 2 mg KOH/g
Glasumwandlungstemperatur (DTA): 4–12 °C

Die Auslaufviskosität im DIN-4-Becher bei 20 °C der 60%igen Lösung in
a) Butylacetat/Xylol 1:3 405 sec
b) EGA/Xylol 1:2 573 sec
c) EGA/Solvesso 150 1:2 1006 sec

2) 7 Mol (1162 g) Isophthalsäure, 6 Mol (708 g) Hexandiol-1,6 und 2 Mol (268 g Trimethylolpropan wurden wie in Beispiel B1 beschrieben bis zu einer Säurezahl < 2 mg KOH/g verestert.

Physikalische Daten:
OH-Zahl: 105 mg KOH/g
Säurezahl: < 2 mg KOH/g
Glasumwandlungstemperatur (DTA):
+ 4 °C bis + 12 °C

Die Auslaufviskosität im DIN-4-Becher bei 20 °C der 60%igen Lösung in
a) Butylacetat/Xylol 1:3 525 sec
b) EGA/Xylol 1:2 657 sec
c) EGA/Solvesso 150 1:2 1133 sec

3) 7 Mol (1162 g) Isophthalsäure, 5 Mol (590 g) Hexandiol-1,6, 1 Mol 3-Methyl-pentandiol-1,5 und 2 Mol (268 g) Trimethylolpropan wurden gemäss B1 bis zur Säurezahl 2 mg KOH/g verestert.

Physikalische Daten:
OH-Zahl: 95–105 mg KOH/g
Säurezahl: < 2 mg KOH/g
Glasumwandlungstemperatur (DTA):
+ 4 °C bis 16 °C

Die Auslaufviskosität im DIN-4-Becher bei 20 °C der 60%igen Lösung in
a) Butylacetat/Xylol 1:3 300 sec
b) EGA/Xylol 1:2 470 sec
c) EGA/Solvesso 150 1:2 751 sec

C I Polyurethan-Einbrennlacke (voll blockiert)

Für die Formulierungen der pigmentierten Lacksysteme wurden sowohl die beschriebenen 60%igen Isocyanatlösungen als auch die 60%igen Polyesterlösungen verwendet.

Beispiel 1

100 Gew.-T. Polyesterlösung gemäss B1 wurden mit 28,9 Gew.-T. blockierter Isocyanatlösung gemäss A2 gemischt und anschliessend mit 66,3 Gew.-T. Weisspigment ($TiO_2$) und 0,48 Gew.-T. Verlaufmittel (Siliconöl OL; Hersteller: Fa. Bayer AG) in der Sandmühle abgerieben.

Die Applikation erfolgte auf 1 mm Stahl- und Aluminiumbleche und die Aushärtung wurde in einem Umlufttrockenschrank durchgeführt.

Tabelle 1 gibt einen Überblick über die Härtungsbedingungen und die mechanischen Kenndaten der Lackfilme. Die Schichtdicke der Lackfilme lag zwischen 25 und 30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90''/300°C | 168 | 111 | >10 | >82 (945) | 0–1 | 2 H | 0 | 70–73 | 85–88 |
| 5'/200°C | 167 | 100 | >10 | >82 (945) | 0 | 2 H | 0 | 71–74 | 84–89 |
| 7'/200°C | 169 | 111 | >10 | >82 (945) | 0–1 | 2 H | 0 | 70–75 | 85–90 |
| 15'/180°C | 168 | 111 | >10 | >82 (945) | 0–1 | 2 H | 0 | 70–74 | 83–88 |
| 30'/160°C | 161 | 100 | >10 | >82 (945) | 0–1 | 2 H | 0 | 71–76 | 84–87 |

Es wurden 2,81% ε-Caprolactam abgespalten.

Die Abkürzungen in dieser und den folgenden Tabellen bedeuten:

| | |
|---|---|
| HK | = Härte nach König in sec (DIN 53 157) |
| HB | = Härte nach Buchholz (DIN 53 153) |
| ET | = Tiefung n. Erichsen in mm (DIN 53 156) |
| GS | = Gitterschnittprüfung (DIN 53 151) |
| GG 20° und 60° | = Messung des Glanzes n. Gardner (ASTM-D 523) |
| Imp. rev. | = Impact reverse in inch·1b (g·m) |

Beispiel 2

Die Herstellung und Applikation sowie die Härtung des Lackes erfolgte wie in Beispiel C1 beschrieben.

Rezeptur:

100,00 Gew.-T. Polyesterlösung gemäss B2
29,95 Gew.-T. blockierte Isocyanatlösung gemäss A2
66,85 Gew.-T. Weisspigment ($TiO_2$)
0,40 Gew.-T. Siliconöl OL

In der Tabelle 2 sind die Härtungsbedingungen und die mechanischen Kenndaten der Lackfilme zusammengefasst; die Schichtdicke der Lackfilme lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90''/300°C | 162 | 100 | >10 | >82 (945) | 0 | 2 H | 0 | 78–80 | 88–90 |
| 5'/200°C | 160 | 100 | >10 | >82 (945) | 0 | 2 H | 0 | 78–80 | 89–91 |
| 7'/200°C | 165 | 111 | >10 | >82 (945) | 0 | 2 H | 0 | 78–84 | 91 |
| 15'/180°C | 164 | 111 | >10 | >82 (945) | 0 | 2 H | 0 | 80–83 | 91 |
| 30'/160°C | 159 | 100 | >10 | >82 (945) | 0–1 | H–2 H | 0 | 81–83 | 90–92 |

Es wurden 2,89 ε-Caprolactam abgespalten.

Beispiel 3

Die Herstellung und Applikation sowie die Härtung des Lackes erfolgte gemäss C1.

Rezeptur:

100,00 Gew.-T. Polyesterlösung gemäss B3
30,84 Gew.-T. blockierte Isocyanatlösung gemäss A2
67,31 Gew.-T. Weisspigment ($TiO_2$)
0,40 Gew.-T. Siliconöl OL

In der Tabelle 3 werden die Härtungsbedingungen und die mechanischen Kenndaten der Lackfilme gezeigt. Die Schichtdicke der Probeanstriche lag bei 25–30 µm.

| Einbrennbedingungen Zeit/Temp. | Mechanische Kenndaten HK | HB | ET | Imp. rev. | T-Bend-Test | Bleistifthärte | GS | GG 20° | GG 60° |
|---|---|---|---|---|---|---|---|---|---|
| 90''/300 °C | 152 | 111 | > 10 | > 82 (945) | 0 | 2 H | 0 | 73–75 | 84–87 |
| 5'/200 °C | 149 | 100 | > 10 | > 82 (945) | 0 | 2 H | 0 | 73–76 | 85–88 |
| 7'/200 °C | 153 | 111 | > 10 | > 82 (945) | 0 | 2 H | 0 | 74–77 | 84–89 |
| 15'/180 °C | 150 | 111 | > 10 | > 82 (945) | 0 | 2 H | 0 | 73–78 | 86–88 |
| 30'/160 °C | 148 | 100 | > 10 | > 82 (945) | 0 | 2 H | 0 | 72–77 | 83–89 |

Es wurden 2,95% ε-Caprolactam abgespalten.

## Beispiel 4

Die Herstellung und Applikation sowie die Härtung des Lackes erfolgte gemäss C1.

Rezeptur:
100,00 Gew.-T Polyesterlösung gemäss B1
25,60 Gew.-T. blockierte Isocyanatlösung gemäss A3
64,60 Gew.-T. Weisspigment ($TiO_2$)
0,39 Gew.-T. Siliconöl OL

Tabelle 4 gibt einen Überblick über die Härtungsbedingungen und die mechanischen Kenndaten der Lackfilme. Die Schichtdicke der Probeanstriche lag bei 25–30 μm.

| Einbrennbedingungen Zeit/Temp. | Mechanische Kenndaten HK | HB | ET | Imp. rev. | T-Bend-Test | Bleistifthärte | GS | GG 20° | GG 60° |
|---|---|---|---|---|---|---|---|---|---|
| 80''/300 °C | 164 | 100 | > 10 | > 82 (945) | 0 | 2 H | 0 | 71 | 85–87 |
| 4'/200 °C | 165 | 111 | > 10 | > 82 (945) | 0–1 | 2 H | 0 | 72–75 | 84–86 |
| 5'/200 °C | 164 | 100 | > 10 | > 82 (945) | 0 | 2 H | 0 | 70–74 | 85–88 |
| 10'/180 °C | 166 | 100 | > 10 | > 82 (945) | 0 | 2 H | 0 | 71–75 | 83–87 |
| 25'/160 °C | 169 | 111 | > 10 | > 82 (945) | 0–1 | 2 H | 0 | 73 | 86–90 |
| 30'/150 °C | 164 | 111 | > 10 | > 82 (945) | 0 | H–2 H | 0 | 72–76 | 86–89 |
| 35'/140 °C | 161 | 100 | > 10 | > 82 (945) | 0 | 2 H | 0 | 70–74 | 85–88 |

Es wurden 1,87% Acetonoxim abgespalten.

## Beispiel 5

Die Herstellung und Applikation sowie die Härtung des Lackes erfolgte gemäss C1.

Rezeptur:
100,00 Gew.-T. Polyesterlösung gemäss B2
26,55 Gew.-T. blockierte Isocyanatlösung gemäss A3
65,10 Gew.-T. Weisspigment ($TiO_2$)
0,38 Gew.-T. Siliconöl OL

Tabelle 5 zeigt die Härtungsbedingungen und die mechanischen Kenndaten der Lackfilme. Die Schichtdicke der Lackfilme betrug 25–30 μm.

| Einbrennbedingungen Zeit/Temp. | Mechanische Kenndaten HK | HB | ET | Imp. rev. | T-Bend-Test | Bleistifthärte | GS | GG 20° | GG 60° |
|---|---|---|---|---|---|---|---|---|---|
| 80''/300 °C | 162 | 111 | > 10 | > 82 (945) | 0–1 | 2 H | 0 | 78 | 88–90 |
| 4'/200 °C | 165 | 100 | > 10 | > 82 (945) | 0 | 2 H | 0 | 78–82 | 91 |
| 5'/200 °C | 164 | 111 | > 10 | > 82 (945) | 0 | 2 H | 0 | 83 | 90–93 |
| 10'/180 °C | 167 | 111 | > 10 | > 82 (945) | 0–1 | 2 H | 0 | 81 | 89–93 |

Tabelle 5 (Fortsetzung)

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 25'/160 °C | 168 | 100 | > 10 | > 82 (945) | 0–1 | 2 H | 0 | 80–82 | 94 |
| 30'/150 °C | 161 | 100 | > 10 | > 82 (945) | 0 | 2 H | 0 | 79–84 | 90–94 |
| 35'/140 °C | 163 | 100 | > 10 | > 82 (945) | 0 | 2 H | 0 | 82–84 | 89–94 |

Es wurden 1,92% Acetonoxim abgespalten.

Beispiel 6

Die Herstellung und Applikation sowie die Härtung des Lackes erfolgte gemäss C1

Rezeptur:

100,00 Gew.-T. Polyesterlösung gemäss B3
27,34 Gew.-T. blockierte Isocyanatlösung gemäss A3
65,50 Gew.-T. Weisspigment ($TiO_2$)
0,39 Gew.-T. Siliconöl OL

Tabelle 6 gibt einen Überblick über die Härtungsbedingungen und die mechanischen Kenndaten der Lackfilme. Die Schichtdicke der Probeanstriche betrug 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 80''/300 °C | 150 | 100 | > 10 | > 82 (945) | 0 | 2 H | 0 | 73–76 | 82–86 |
| 4'/200 °C | 149 | 111 | > 10 | > 82 (945) | 0 | 2 H | 0 | 71–77 | 82–88 |
| 5'/200 °C | 151 | 100 | > 10 | > 82 (945) | 0 | 2 H | 0 | 74–78 | 83–87 |
| 10'/180 °C | 148 | 100 | > 10 | > 82 (945) | 0 | 2 H | 0 | 72–77 | 84–88 |
| 25'/160 °C | 150 | 100 | > 10 | > 82 (945) | 0 | 2 H | 0 | 73–79 | 82–83 |
| 30'/150 °C | 151 | 111 | > 10 | > 82 (945) | 0 | 2 H | 0 | 71–76 | 83–88 |
| 35'/140 °C | 149 | 100 | > 10 | > 82 (945) | 0 | 2 H | 0 | 72–77 | 82–87 |

Es wurden 1,92% Acetonoxim abgespalten.

C II Polyurethan-Einbrennlacke
(teilweise blockiert)
Allgemeine Herstellungsvorschrift

Zu den 60%igen oder 50%igen teilweise blockierten Uretdiongruppen-haltigen IPDI-Addukt-Lösungen, die gemäss A4 hergestellt wurden, wurden die entsprechenden 60%igen Polyesterlösungen gemäss B in stöchiometrischem Verhältnis bei 60–70 °C zugegeben, ggfs. zusätzlich mit 0,1 Gew.-% Dibutylzinndilaurat versetzt und so lange bei dieser Temperatur gehalten, bis der freie NCO-Gehalt auf < 0,2% gesunken war. Anschliessend wurden den 60%igen Lacklösungen, die ggfs. auch mit Lösungsmittel weiter verdünnt wurden, Verlaufmittel (Siliconöl OL; Hersteller: Fa. Bayer AG) und Weisspigment ($TiO_2$) zugesetzt und in der Sandmühle abgerieben.

Die Applikation erfolgte auf 1 mm Stahl- und Aluminiumbleche und die Aushärtung wurde in einem Umlufttrockenschrank durchgeführt.

Beispiel 7

100,00 Gew.-T. Polyesterlösung gemäss B1
24,79 Gew.-T. blockierte Isocyanatlösung gemäss A4a
67,40 Gew.-T. Weisspigment ($TiO_2$)
0,39 Gew.-T. Siliconöl OL

Tabelle 7 gibt einen Überblick über die Härtungsbedingungen und die mechanischen Kenndaten der Lackfilme. Die Schichtdicke der Lackfilme lag zwischen 25 und 30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300°C | 168 | 111 | >10 | >82 (945) | 0–1 | 2 H | 0 | 71–74 | 85–87 |
| 5'/200°C | 169 | 100 | >10 | >82 (945) | 0 | 2 H | 0 | 70–73 | 83–87 |
| 7'/200°C | 170 | 111 | >10 | >82 (945) | 0–1 | 2H–3H | 0 | 70–74 | 85–89 |
| 15'/180°C | 166 | 111 | >10 | >82 (945) | 0–1 | 2 H | 0 | 72–74 | 82–87 |
| 30'/160°C | 167 | 100 | >10 | >82 (945) | 0–1 | 2 H | 0 | 70–75 | 84–88 |

Es wurden 1,48 ε-Caprolactam abgespalten.

Beispiel 8

Die Herstellung und Applikation sowie die Härtung des Lackes erfolgte wie in Beispiel C II7 beschrieben.

Rezeptur:
100,00 Gew.-T. Polyesterlösung gemäss B2
25,29 Gew.-T. blockierte Isocyanatlösung gemäss A4a
64,45 Gew.-T. Weisspigment ($TiO_2$)
0,38 Gew.-T. Siliconöl OL

In der Tabelle 8 sind die Härtungsbedingungen und die mechanischen Kenndaten der Lackfilme zusammengefasst. Die Schichtdicke der Lackfilme lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300°C | 164 | 100 | 10 | 82 (945) | 0–1 | 2 H | 0 | 77–80 | 88–90 |
| 5'/200°C | 166 | 100 | 10 | 82 (945) | 0 | 2 H | 0 | 76–79 | 88–90 |
| 7'/200°C | 169 | 111 | 10 | 82 (945) | 0 | 2 H | 0 | 78–82 | 90 |
| 15'/180°C | 165 | 111 | 10 | 82 (945) | 0 | 2 H | 0 | 80–84 | 91 |
| 30'/160°C | 162 | 100 | 10 | 82 (945) | 0–1 | H–2 H | 0 | 80–83 | 89–90 |

Es wurden 1,50% ε-Caprolactam abgespalten.

Beispiel 9

Die Herstellung und Applikation sowie die Härtung des Lackes erfolgte gemäss C II7.

Rezeptur:
100,00 Gew.-T. Polyesterlösung gemäss B3
25,80 Gew.-T. blockierte Isocyanatlösung gemäss A4a
67,95 Gew.-T. Weisspigment ($TiO_2$)
0,39 Gew.-T. Siliconöl OL

In der Tabelle 9 werden die Härtungsbedingungen und die mechanischen Kenndaten der Lackfilme gezeigt. Die Schichtdicke der Probeanstriche lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300°C | 180 | 111 | >10 | >82 (945) | 0–1 | 3 H | 0 | 69–72 | 81–85 |
| 5'/200°C | 182 | 111 | >10 | >82 (945) | 0 | 3 H | 0 | 65–70 | 80–86 |
| 7'/200°C | 180 | 111 | >10 | >82 (945) | 0–1 | 3 H | 0 | 68–72 | 79–84 |
| 15'/180°C | 178 | 111 | >10 | >82 (945) | 0–1 | 3 H | 0 | 70–74 | 81–84 |
| 30'/160°C | 176 | 100 | >10 | >82 (945) | 0 | 3 H | 0 | 68–70 | 80–86 |

Es wurden 1,53% ε-Caprolactam abgespalten.

Beispiel 10

Die Herstellung und Applikation sowie die Härtung des Lackes erfolgte gemäss C II7.

Rezeptur:
100,00 Gew.-T. Polyesterlösung gemäss B1
23,07 Gew.-T. blockierte Isocyanatlösung gemäss A4c
66,47 Gew.-T. Weisspigment ($TiO_2$)
0,38 Gew.-T. Siliconöl OL

Tabelle 10 gibt einen Überblick über die Härtungsbedingungen und die mechanischen Kenndaten der Lackfilme. Die Schichtdicke der Probeanstriche lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90''/300°C | 166 | 100 | >10 | >82 (945) | 0–1 | 2 H | 0 | 72 | 83–86 |
| 4'/200°C | 167 | 111 | >10 | >82 (945) | 0–1 | 2 H | 0 | 74–76 | 82–87 |
| 6'/200°C | 165 | 100 | >10 | >82 (945) | 0 | 2 H | 0 | 71–73 | 86–88 |
| 10'/180°C | 164 | 100 | >10 | >82 (945) | 0 | H–2H | 0 | 70–72 | 83–86 |
| 20'/170°C | 168 | 111 | >10 | >82 (945) | 0–1 | 2 H | 0 | 75 | 84–89 |
| 30'/160°C | 167 | 111 | >10 | >82 (945) | 0 | 2 H | 0 | 73–74 | 85–88 |
| 35'/150°C | 162 | 100 | >10 | >82 (945) | 0–1 | H–2H | 0 | 72–76 | 85–89 |

Es wurden 0,97% Acetonoxim abgespalten.

Beispiel 11

Die Herstellung und Applikation sowie die Härtung des Lackes erfolgte gemäss C II7.

Rezeptur:
100,00 Gew.-T. Polyesterlösung gemäss B2
23,54 Gew.-T. blockierte Isocyanatlösung gemäss A4c
66,73 Gew.-T. Weisspigment ($TiO_2$)
0,38 Gew.-T. Siliconöl OL

Tabelle 11 zeigt die Härtungsbedingungen und die mechanischen Kenndaten der Lackfilme. Die Schichtdicke der Lackfilme betrug 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90''/300°C | 162 | 111 | 10 | 82 (945) | 0–1 | 2 H | 0 | 78 | 88–90 |
| 4'/200°C | 163 | 100 | 10 | 82 (945) | 0 | 2 H | 0 | 79–83 | 90 |
| 6'/200°C | 166 | 111 | 10 | 82 (945) | 0 | 2 H | 0 | 80–82 | 89–93 |
| 10'/180°C | 164 | 111 | 10 | 82 (945) | 0–1 | 2 H | 0 | 82 | 89–94 |
| 20'/170°C | 165 | 100 | 10 | 82 (945) | 0–1 | 2 H | 0 | 79–82 | 92 |
| 30'/160°C | 161 | 100 | 10 | 82 (945) | 0 | H–2H | 0 | 80–84 | 90–95 |
| 35'/150°C | 162 | 100 | 10 | 82 (945) | 0 | 2 H | 0 | 81–85 | 88–92 |

Es wurden 0,98% Acetonoxim abgespalten.

Beispiel 12

Die Herstellung und Applikation sowie die Härtung des Lackes erfolgte gemäss C II7.

Rezeptur:
100,00 Gew.-T. Polyesterlösung gemäss B3
24,01 Gew.-T. blockierte Isocyanatlösung gemäss A4c
66,98 Gew.-T. Weisspigment ($TiO_2$)
0,38 Gew.-T. Siliconöl OL

Tabelle 12 gibt einen Überblick über die Härtungsbedingungen und die mechanischen Kenndaten der Lackfilme. Die Schichtdicke der Probeanstriche betrug 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300 °C | 178 | 100 | > 10 | > 82 (945) | 0 | 3 H | 0 | 74–76 | 82–86 |
| 4'/200 °C | 177 | 111 | > 10 | > 82 (945) | 0–1 | 3 H | 0 | 70–73 | 83–88 |
| 6'/200 °C | 180 | 125 | > 10 | > 82 (945) | 0 | 3 H | 0 | 72–76 | 84–89 |
| 10'/180 °C | 179 | 100 | > 10 | > 82 (945) | 0 | 3 H | 0 | 72–78 | 82–86 |
| 20'/170 °C | 177 | 111 | > 10 | > 82 (945) | 0 | 3 H | 0 | 74–79 | 83–87 |
| 30'/160 °C | 175 | 111 | > 10 | > 82 (945) | 0–1 | 3 H | 0 | 72–78 | 84–89 |
| 35'/150 °C | 176 | 100 | > 10 | > 82 (945) | 0 | 3 H | 0 | 70–77 | 82–86 |

Es wurden 1,00% Acetonoxim abgespalten.

## Beispiel 13

Die Herstellung und Applikation sowie die Härtung des Lackes erfolgte gemäss C II7.

Rezeptur:
100,00 Gew.-T. Polyesterlösung gemäss B2
22,69 Gew.-T. blockierte Isocyanatlösung gemäss A4b
52,73 Gew.-T. Weisspigment ($TiO_2$)
0,35 Gew.-T. Siliconöl OL

In der Tabelle 13 werden die Härtungsbedingungen und die mechanischen Kenndaten der Lackfilme demonstriert. Die Schichtdicke der Probeanstriche lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300 °C | 167 | 125 | > 10 | > 82 (945) | 0 | 2 H | 0 | 71–77 | 80–84 |
| 5'/200 °C | 164 | 111 | > 10 | > 82 (945) | 0–1 | 2 H | 0 | 73–75 | 82–87 |
| 7'/200 °C | 169 | 111 | > 10 | > 82 (945) | 0 | 2 H | 0 | 72–76 | 81–86 |
| 10'/180 °C | 168 | 125 | > 10 | > 82 (945) | 0 | 2 H | 0 | 70–75 | 80–85 |
| 20'/170 °C | 166 | 111 | > 10 | > 82 (945) | 0 | 2 H | 0 | 72–78 | 82–86 |
| 30'/160 °C | 167 | 111 | > 10 | > 82 (945) | 0–1 | 2 H | 0 | 71–77 | 81–87 |

Es wurden 0,68% ε-Caprolactam abgespalten.

## Beispiel 14

Die Herstellung und Applikation sowie die Härtung der Lackfilme erfolgte wie in Beispiel C II7 beschrieben.

Rezeptur:
100,00 Gew.-T. Polyesterlösung gemäss B3
23,14 Gew.-T. blockierte Isocyanatlösung gemäss A4b
52,93 Gew.-T. Weisspigment ($TiO_2$)
0,35 Gew.-T. Siliconöl OL

Tabelle 14 gibt einen Überblick über die Härtungsbedingungen und die mechanischen Kenndaten der Lackfilme. Die Schichtdicke der Probeanstriche lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90"/300 °C | 174 | 111 | > 10 | > 82 (945) | 0 | 3 H | 0 | 70–73 | 81–86 |
| 5'/200 °C | 173 | 111 | > 10 | > 82 (945) | 0–1 | 2 H–3 H | 0 | 72–76 | 80–85 |
| 7'/200 °C | 176 | 125 | > 10 | > 82 (945) | 0 | 3 H | 0 | 69–75 | 79–87 |

Tabelle 14 (Fortsetzung)

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 10'/180°C | 175 | 111 | >10 | >82 (945) | 0 | 3 H | 0 | 71–77 | 82–86 |
| 20'/170°C | 178 | 111 | >10 | >82 (945) | 0–1 | 3 H | 0 | 70–75 | 81–85 |
| 30'/160°C | 174 | 111 | >10 | >82 (945) | 0 | 2 H–3 H | 0 | 72–77 | 82–88 |

Es wurden 0,69% ε-Caprolactam abgespalten.

Beispiel 15

Die Herstellung und Applikation sowie die Härtung der Lackfilme erfolgte wie in Beispiel C II7 beschrieben.

Rezeptur:
1000,00 Gew.-T. Polyesterlösung gemäss B2
21,95 Gew.-T. blockierte Isocyanatlösung gemäss A4d
52,41 Gew.-T. Weisspigment ($TiO_2$)
0,35 Gew.-T. Siliconöl OL

In der Tabelle 15 werden die Härtungsbedingungen und die mechanischen Kenndaten der Lackfilme gezeigt. Die Schichtdicke der Probeanstriche lag bei 25–30 µm.

| Einbrennbedingungen | Mechanische Kenndaten | | | | | | | | |
|---|---|---|---|---|---|---|---|---|---|
| Zeit/Temp. | HK | HB | ET | Imp. rev. | T-Bend-Test | Bleistifthärte | GS | GG 20° | GG 60° |
| 90''/300°C | 165 | 125 | >10 | >82 (945) | 0–1 | 2 H | 0 | 69–74 | 80–84 |
| 4'/200°C | 163 | 125 | >10 | >82 (945) | 0 | 2 H | 0 | 71–75 | 82–85 |
| 6'/200°C | 170 | 125 | >10 | >82 (945) | 0 | 2 H–3 H | 0 | 70–76 | 81–88 |
| 10'/180°C | 169 | 111 | >10 | >82 (945) | 0 | 2 H | 0 | 71–77 | 84–86 |
| 20'/170°C | 167 | 125 | >10 | >82 (945) | 0 | 2 H | 0 | 71–77 | 80–87 |
| 30'/160°C | 169 | 111 | >10 | >82 (945) | 0–1 | 2 H | 0 | 70–76 | 82–86 |
| 35'/150°C | 167 | 111 | >10 | >82 (945) | 0 | 2 H | 0 | 72–78 | 80–85 |

Es wurden 0,45% Acetonoxim abgespalten.

**Patentanspruch**

Einbrennlacke auf Basis eines Gemisches aus hydroxylgruppenhaltigen Polymeren, blockierten Polyisocyanaten und organischen Lösungsmitteln sowie gegebenenfalls üblichen Lackzusätzen, bestehend aus

a. 40–70 Gew.-% eines Gemisches von hydroxylgruppenhaltigen Polymeren mit Hydroxylzahlen zwischen 40 und 200 mg KOH/g, vorzugsweise zwischen 60 und 150 mg KOH/g, und isocyanuratfreien uretdiongruppenhaltigen, teilweise oder ganz blockierten, gegebenenfalls mit Glykolen kettenverlängerten Isophorondiisocyanaten der allgemeinen Formel

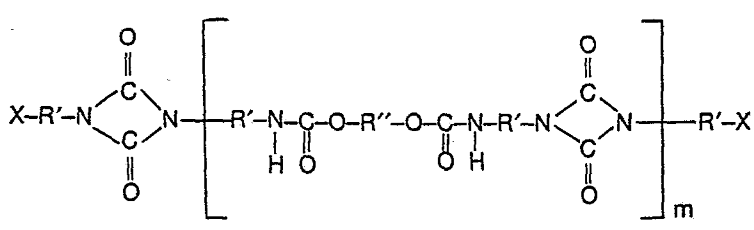

worin X = –N–C = O oder 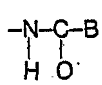 , m = 0–6

R' = 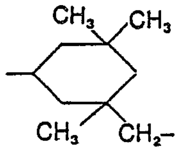

R'' = gleiche oder verschiedene, gegebenenfalls substituierte Alkylen- oder Cycloalkyl- bzw. Aromatenreste mit 1–12 C-Atomen

B für 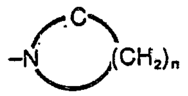 n = 3–7

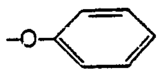

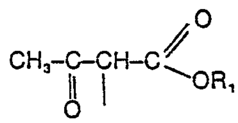

oder 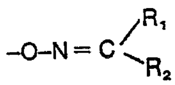 steht, worin $R_1$ und $R_2$

für gleiche oder verschiedene aliphatische Kohlenwasserstoffreste mit 1–4 C-Atomen stehen oder $R_1$ und $R_2$ zusammen mit dem, mit dem Stickstoffatom in einer Doppelbindung verknüpften C-Atom, einem cycloaliphatischen KW-Rest mit 5–6 C-Atomen bilden, und wobei auf ein Hydroxylgruppenäquivalent 0,8–1,2 NCO-Gruppenäquivalente kommen,

b. 0–3 Gew.-% Vernetzungskatalysator,

c. 30–60 Gew.-% organischem Lösungsmittel oder Lösungsmittelgemisch,

wobei sich die Prozentzahlen auf 100 addieren, sowie zusätzlich

d. 0–65 Gew.-% Pigmenten und/oder Füllstoffen,

e. 0–5 Gew.-% Farbstoffen und gegebenenfalls

f. 0,1–3 Gew.-% Verlaufmittel, Glanzverbesserer, Antioxidantien und/oder Hitzestabilisatoren.

## Claim

Baking finishes based on a mixture of polymers containing hydroxyl groups, blocked polyisocyanates and organic solvents and, if appropriate, conventional finish additives, comprising

a. 40–70% by weight of a mixture of polymers containing hydroxyl groups and having hydroxyl numbers between 40 and 200 mg of KOH/g, preferably between 60 and 150 mg of KOH/g, and isocyanurate-free isophorone diisocyanates, which contain uretdione groups, are partially or completely blocked and, if appropriate, are chain-extended with glycols, of the general formula

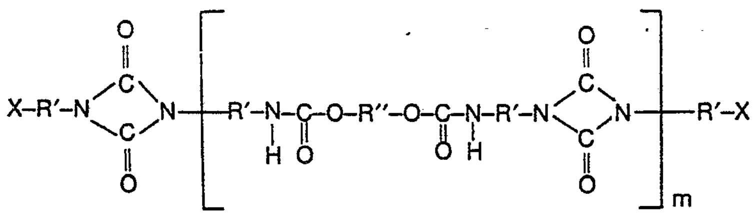

wherein X = –N–C=O or 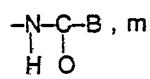 , m = 0–6

R' = 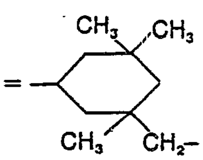

R'' = identical or different, optionally substituted alkylene or cycloalkyl or aromatic radicals having 1–12 C atoms, and

B represents 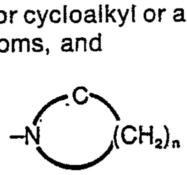 with n = 3–7,

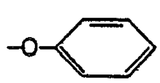

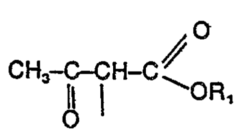

or 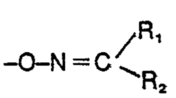

in which $R_1$ and $R_2$ represent identical or different aliphatic hydrocarbon radicals having 1–4 C atoms or $R_1$ and $R_2$, together with the C atom linked to the nitrogen atom by a double bond, form a cycloaliphatic hydrocarbon radical having 5–6 C atoms, 0.8–1.2 NCO group equivalents being present for one hydroxyl group equivalent,

b. 0–3% by weight of a crosslinking catalyst, and

c. 30–60% by weight of an organic solvent or solvent mixture,

the percentage figures adding up to 100, and additionally

d. 0–65% by weight of pigments and/or fillers,

e. 0–5% by weight of dyestuffs and, if appropriate,

f. 0.1–3% by weight of a flow agent, gloss improver, antioxidants and/or heat-stabilisers.

## Revendication

Vernis séchant à l'étuve à base d'un mélange de polymères contenant des groupes hydroxyle, de polyisocyanates bloqués, et de solvants organiques, ainsi qu'éventuellement des additifs pour vernis courants constitué de:

a. 40 à 70% en poids d'un mélange de polymères contenant des groupes hydroxyle avec des indices d'hydroxyle compris entre 40 et 200 mg de KOH/g, des préférence entre 60 et 150 mg de

KOH/g et de diisocyanates d'isophoron contenant des groupes uretdione exempts d'isocyanurates, partiellement ou totalement bloqués, dont les chaînes ont été éventuellement prolongées avec des glycols, répondant à la formule générale

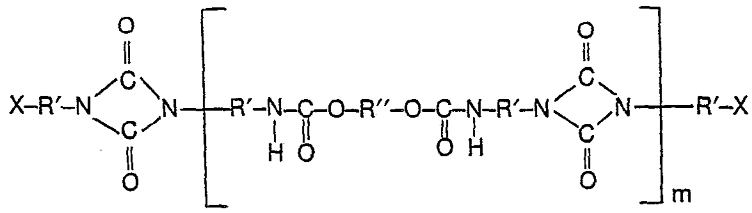

où l'on a X = –N–C=O ou 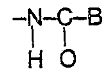 , m = 0–6

R' = 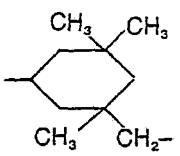

R'' = représente des restes semblables ou différents, éventuellement substitués alcoylène ou cycloalcoyle ou aromatiques avec 1 à 12 atomes de C

B représente 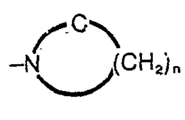 n = 3–7

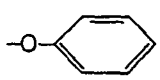

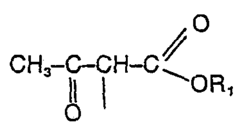

ou 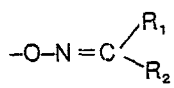

où $R_1$ et $R_2$ représentent des restes hydrocarbures aliphatiques, semblables ou différents avec 1 à 4 atomes de carbone, ou $R_1$ et $R_2$ forment, en commun avec 1 atome de C, lié en une double liaison avec l'atome d'azote, un reste KW cycloaliphatique avec 5 à 6 atomes de C, et où l'on a pour un équivalent de groupe hydroxyle, 0,8 à 1,2 équivalent de groupes NCO,

b. 0 à 3% en poids d'un catalyseur de réticulation,

c. 30 à 60% en poids d'un solvant organique ou d'un mélange de solvants les pourcentages s'additionnant pour donner 100 et supplémentairement,

d. 0 à 65% en poids de pigments et/ou charges,

e. 0 à 5% en poids de colorants, et éventuellement

f. 0, 1 à 3% en poids d'un dilutif, d'un agent améliorant la brillance, d'un anti-oxydants et/ou d'agents de stabilisation à la chaleur.